**Europäisches Patentamt**

**European Patent Office**

**Office européen des brevets**

(19)

(11) Veröffentlichungsnummer: **0 031 040**

**A2**

(12) # EUROPÄISCHE PATENTANMELDUNG

(21) Anmeldenummer: 80107304.0

(22) Anmeldetag: 24.11.80

(51) Int. Cl.³: **C 08 J 9/30**
C 08 J 9/36, C 08 F 8/28

(30) Priorität: 01.12.79 DE 2948508

(43) Veröffentlichungstag der Anmeldung:
01.07.81 Patentblatt 81/26

(84) Benannte Vertragsstaaten:
AT BE CH DE FR GB IT LI LU NL SE

(71) Anmelder: HOECHST AKTIENGESELLSCHAFT
Zentrale Patentabteilung Postfach 80 03 20
D-6230 Frankfurt/Main 80(DE)

(72) Erfinder: Zimmermann, Wolfgang, Dr.
Im Stückes 48
D-6233 Kelkheim (Taunus)(DE)

(72) Erfinder: Schindler, Hermann, Dr.
Rüdesheimer Strasse 77
D-6238 Hofheim am Taunus(DE)

(72) Erfinder: Pospich, Günther
Albert-Blank-Strasse 6
D-6230 Frankfurt am Main 80(DE)

(54) **Offenporiger Formkörper aus acetalisiertem Polyvinylalkohol und Verfahren zu seiner Herstellung.**

(57) Bei der Acetalisierung von Polyvinylalkohol in einem sauren wäßrigen Medium in Gegenwart eines Netzmittels bildet sich ein offenporiger fester Schaum, wenn das Reaktionsgemisch Gasblasen enthält. Diese Gasblasen werden insbesondere durch Einrühren von Luft erzeugt. Wird die Acetalisierung in Gegenwart einer Nucleinsäure durchgeführt, so erhält man einen porösen Formkörper; die Poren liegen in gleichmäßiger Verteilung vor. Der getrocknete Formkörper nimmt ein Vielfaches seines Gewichts an Wasser auf. Er wird als Schwamm in Haushalt und Industrie eingesetzt.

EP 0 031 040 A2

Croydon Printing Company Ltd.

HOECHST AKTIENGESELLSCHAFT    HOE 79/F 326          Dr.EG/Pa

Offenporiger Formkörper aus acetalisiertem Polyvinylalkohol
und Verfahren zu seiner Herstellung

Die Erfindung bezieht sich auf einen Formkörper aus acetalisiertem Polyvinylalkohol und ein Verfahren zu seiner Herstellung.

Die Herstellung von Schwammaterial mit offenen Poren durch
Umsetzung von  Polyvinylalkohol mit Formaldehyd in wäßrigem
Medium ist seit langem bekannt (vgl. US-Patentschrift
2 609 347). Die Reaktion erfolgt zwischen 20 und 60°C in
Gegenwart eines sauren Katalysators, z.B. Schwefelsäure,
wobei Gasblasen im Reaktionsgemisch dispergiert vorliegen.
Diese Gasblasen werden erzeugt, indem Luft in die Reaktionsmasse geschlagen wird. Durch zusätzlichen Einsatz von Netzmitteln sollen sich Blasen in einheitlicher Größe bilden;
ferner soll dadurch eine bessere Verteilung der Blasen in
der Masse erreicht werden. Außerdem sollen die Netzmittel
den entstehenden Schaum stabilisieren. Das scheinbare spezifische Gewicht der so erhaltenen Schwämme liegt im Bereich
von 0,03 bis 0,15, vorzugsweise 0,05 bis 0,06.

Das bekannte Verfahren hat den Nachteil, daß - vor allem bei
der Durchführung in technischem Maßstab - doch Poren mit
unterschiedlicher Größe und in inhomogener Verteilung entstehen, da im Laufe der Acetalisierungsreaktion ein Aufsteigen der Luftblasen in der Reaktionsmasse nicht vollständig verhindert werden kann und dadurch die Homogenität
der Porenverteilung gestört wird. Demzufolge neigt die erhaltene Masse zum Schrumpfen, wodurch das Saug- und Wasserrückhaltevermögen des Schwammes verringert wird. Mit diesem
Volumenschwund ist bei der technischen Herstellung des
Schwammes auch ein erhöhter Abfall und Verschnitt verbunden.
Schließlich benötigt das bekannte Verfahren eine lange
Reaktionszeit, z.B. 54 Stunden bei einer Temperatur von 30°C,
und ist dadurch unwirtschaftlich.

BAD ORIGINAL

Aufgabe der Erfindung ist die Schaffung eines schwammartigen, porösen Formkörpers auf der Grundlage von acetalisiertem Polyvinylalkohol, in dem miteinander verbundene Poren möglichst einheitlicher Größe möglichst homogen verteilt vorliegen und der in wirtschaftlicher Weise in technischem Maßstab herstellbar ist.

Die Erfindung betrifft einen offenporigen Formkörper aus acetalisiertem Polyvinylalkohol und ist dadurch gekennzeichnet, daß der Formkörper (a) aus einem acetalisierten Polyvinylalkohol besteht, der vor der Acetalisierung eine Esterzahl von 50 bis 270 mg KOH/g und dessen 4gewichtsprozentige wäßrige Lösung bei einer Temperatur von 20°C eine Viskosität von 4 bis 50 mPa·s aufwies, (b) Poren mit Durchmessern im Bereich von 0,5 bis 5 mm in gleichmäßiger Verteilung aufweist und (c) eine Nucleinsäure enthält.

Die Erfindung betrifft ferner ein Verfahren zur Herstellung eines offenporigen Formkörpers aus acetalisiertem Polyvinylalkohol durch Acetalisierung von Polyvinylalkohol in einem Gasblasen enthaltenden, sauren wäßrigen Medium in Gegenwart eines üblichen Netzmittels, dadurch gekennzeichnet, daß ein Polyvinylalkohol, der eine Esterzahl von 50 bis 270 mg KOH/g und dessen 4-gewichtsprozentige wäßrige Lösung bei einer Temperatur von 20°C eine Viskosität von 4 bis 50 mPa·s aufweist, in Gegenwart einer schaumstabilisierend wirkenden Menge einer Nucleinsäure acetalisiert wird.

Ausgangsmaterial für die Herstellung des erfindungsgemäßen Formkörpers ist ein teilverseifter Polyvinylalkohol mit einer Esterzahl von 50 bis 270 mg KOH/g, vorzugsweise 100 bis 200 mg KOH/g. Die 4gewichtsprozentige wäßrige Lösung des Polyvinylalkohols weist eine Viskosität von 4 bis 50 mPa·s, vorzugsweise 10 bis 26 mPa·s, auf (gemessen bei einer Temperatur von 20°C nach DIN 53015). Während der Acetalisierungsreaktion liegt der Polyvinylalkohol schaumförmig vor. Für die Acetalisierung des Polyvinylalkohols wird ein aliphatischer Aldehyd oder Dialdehyd mit 1 bis 4 Kohlenstoffatomen verwendet. Bevorzugt ist die Verwendung von Formaldehyd oder Paraformaldehyd. Der Aldehyd wird vorzugsweise
in Form einer wäßrigen Lösung eingesetzt. Die Acetalisierung wird in einem sauren wäßrigen Medium durchgeführt.
Dabei dient eine starke Mineralsäure, vorzugsweise Schwefelsäure, als Katalysator; diese wird bevorzugt in Form einer
wäßrigen Lösung verwendet, deren Säuregehalt im Bereich
von 30 bis 80 Gewichtsprozent, vorzugsweise 35 bis 65
Gewichtsprozent, liegt.

Die Acetalisierung des Polyvinylalkohols erfolgt in Gegenwart eines üblichen Netzmittels, vorzugsweise eines anionisch wirksamen Netzmittels. Geeignete Netzmittel sind
insbesondere Alkalisalze, vorzugsweise Natriumsalze, von
Alkylsulfonaten, Arylsulfonaten, Alkylarylsulfonaten sowie
von den entsprechenden Sulfaten, Phosphaten oder Phosphonaten, z.B. Natriumlaurylsulfat, Natriumdodecylbenzolsulfonat und Natriumölsäuremethyltaurid.

Ein wesentliches Merkmal des erfindungsgemäßen Formkörpers
ist die Tatsache, daß er Poren mit Durchmessern von 0,5
bis 5 mm, vorzugsweise 0,5 bis 3 mm, aufweist und eine
Nucleinsäure enthält. Der Nucleinsäuregehalt beträgt vorzugsweise 0,2 bis 2 Gewichtsprozent.

Das erfindungsgemäße Verfahren hat das Kennzeichen, daß
die Acetalisierung des Polyvinylalkohols in Gegenwart
einer schaumstabilisierend wirkenden Menge einer Nucleinsäure durchgeführt wird. Die Menge der Nucleinsäure beträgt vorzugsweise 0,5 bis 5 Gewichtsprozent, insbesondere
1 bis 3 Gewichtsprozent (bezogen auf die Gesamtmenge aus
Polyvinylalkohol und Nucleinsäure). Als Nucleinsäuren sind
sowohl Ribonucleinsäuren (RNS) als auch Desoxyribonucleinsäuren (DNS) anwendbar oder auch Gemische von beiden. Aus
wirtschaftlichen Gründen empfiehlt es sich, nicht isolierte
Nucleinsäuren einzusetzen, sondern nucleinsäurehaltige
Extrakte, wie sie z.B. bei der Gewinnung von mikrobiellen

Bioproteinen anfallen. Der Nucleinsäuregehalt solcher Extrakte beträgt 40 bis 80 Gewichtsprozent, vorzugsweise 50 bis 60 Gewichtsprozent. Als Ausgangsmaterial dienen hierbei Mikroorganismen wie Bakterien, z.B. Methylomonas clara ATCC 31226, und Hefen, z.B. Candida lipolytica ATCC 20383, die durch Züchtung auf Paraffinen in Gegenwart eines wäßrigen Nährmediums erhältlich sind. Die Extrakte lassen sich in bekannter Weise durch Extraktion einer gereinigten mitrobiellen Zellmasse mit Hilfe von Wasser bei einer Temperatur von 30 bis 95°C, vorzugsweise 40 bis 70°C, gewinnen (vgl. deutsche Auslegeschrift 26 33 666). Dieser Extrakt wird erfindungsgemäß vorzugsweise in Form einer wäßrigen Lösung oder Dispersion eingesetzt, wobei der Extraktgehalt im Bereich von 1 bis 5 Gewichtsprozent, vorzugsweise 2 bis 4 Gewichtsprozent, liegt.

Während des erfindungsgemäßen Herstellungsverfahrens dient die Nucleinsäure als Schaumstabilisator. Ein Teil der Nucleinsäure, vorzugsweise 25 bis 35 Gewichtsprozent der jeweils eingesetzten Menge, verbleibt im fertigen Formkörper in chemisch gebundener Form und wirkt quasi als innerer Weichmacher. Die Menge der chemisch gebundenen Nucleinsäure wird durch analytische Bestimmung des Phosphorgehaltes im Formkörper ermittelt.

Das erfindungsgemäße Verfahren wird vorteilhaft so durchgeführt, daß zunächst aus einer wäßrigen Lösung des Polyvinylalkohols, dem Netzmittel und der Nucleinsäure durch homogene Verteilung eines inerten Gases im Reaktionsgemisch ein Schaum hergestellt wird, vorzugsweise durch Einrühren von Luft; dabei betägt die Rührgeschwindigkeit 500 bis 2500 Upm, vorzugsweise 1000 bis 2000 Upm. Das Schaumvolumen soll maximal 50 % des Endvolumens des fertigen Formkörpers betragen. Nach diesem "Vorschäumen" werden der schaumigen Masse der Aldehyd und der Katalysator zugefügt, wobei die Temperatur der Masse 40°C nicht übersteigen soll. Das Gemisch wird dann in einer geschlossenen Form bei einer Temperatur von 65 bis 100°C, vorzugsweise 70 bis 90°C, ruhig stehen gelassen. Die Reaktionszeit beträgt - je nach Größe der Form -2 bis 4 Stunden. Anschließend wird der ohne Schrumpfung erhaltene poröse Formkörper mit Wasser ausgewaschen und zur Gewichtskonstanz getrocknet. Die Trocknungstemperatur beträgt vorzugsweise 70 bis 100$^{\circ}$C.

Der getrocknete Formkörper ist offenporig und zeigt eine weiche, samtartige Oberfläche. Seine Wasseraufnahmefähigkeit beträgt 1500 bis 1800 Gewichtsprozent. (Zum Vergleich: Naturschwamm nimmt weniger als 1000 Gewichtsprozent Wasser auf).

Der erfindungsgemäße offenporige Formkörper eignet sich als Schwamm in Industrie und Haushalt, z.B. als Autoschwamm und Badeschwamm.

Die folgenden Beispiele erläutern die Erfindung. Prozentangaben beziehen sich auf das Gewicht.

Beispiel 1

In einem Becherglas werden 250 g einer 20-%igen wäßrigen Lösung eines Polyvinylalkohols vorgelegt, der eine Esterzahl von 140 mg KOH/g und dessen 4-%ige wäßrige Lösung eine Viskosität von 18 mPa·s aufweist. Zu dieser Lösung wird unter Rühren mit einem Schnellrührer bei 500 Upm portionsweise ein Gemisch aus (a) 30 g einer 4-%igen wäßrigen Lösung von Natrium-ölsäuremethyltaurid und (b) einer Suspension von 1,2 g eines Nucleinsäureextraktes, der aus Methylomonas clara gewonnen wurde und 55 % Nucleinsäure, 5% Phosphor und 15 % Proteine enthält, in 58 g Wasser zugefügt. Dieses Gemisch wird anschließend unter Einrühren von Luft bei einer Rührgeschwindigkeit von 2000 Upm auf ein Volumen von 0,5 l verschäumt, und zu dem Schaum werden nacheinander 60 g einer 30-%igen Formaldehydlösung und 65 g einer 60-%igen Schwefelsäure gegeben, wobei die Temperatur des Gemisches auf etwa 35$^{\circ}$C gehalten wird.

BAD ORIGINAL

Sobald die Schaummasse eine cremeartige Konsistenz aufweist, wird sie in eine säurefeste 1-l-Form gegossen, die dann mit einem Deckel verschlossen wird. Die Form wird bei einer Temperatur von 75°C 4 Stunden lang ruhig stehen gelassen. Danach wird der entstandene Schwamm, dessen Volumen sich gegenüber der vorherigen Schaummasse nicht vermindert hat, mit Wasser ausgewaschen. Nach der Trocknung bei einer Temperatur von 80 °C weist der Schwamm zusammenhängende Poren mit Durchmessern von 1 bis 2 mm auf, die in gleichmäßiger Verteilung vorliegen. Der Nucleinsäuregehalt des getrockneten Schwamms beträgt 0,8 %. Der Schwamm ist elastisch und nimmt das 15fache seines Trockengewichts an Wasser auf.

Beispiel 2

Beispiel 1 wird wiederholt mit folgenden Komponenten:

250 g   Polyvinylalkohol-Lösung (entsprechend Beispiel 1),
 50 g   Natrium-ölsäuremethyltaurid-Lösung
        (entsprechend Beispiel 1),
 90 g   2-%ige Suspension des Nucleinsäureextraktes
        entsprechend Beispiel 1,
 20 g   Paraformaldehyd und
100 g   60-%ige Schwefelsäure.

Der getrocknete Schwamm weist zusammenhängende Poren mit Durchmessern von 0,5 bis 1 mm auf, die in gleichmäßiger Verteilung vorliegen. Der Nucleinsäuregehalt des getrockneten Schwamms beträgt 1 %. Der Schwamm ist elastisch und nimmt das 16fache seines Trockengewichts an Wasser auf.

Beispiel 3

Beispiel 1 wird wiederholt mit folgenden Komponenten:

250 g   Polyvinylalkohol-Lösung (entsprechend Beispiel 1),
 50 g   Natrium-ölsäuremethyltaurid-Lösung
        (entsprechend Beispiel 1),
100 g   2-%ige Suspension des Nucleinsäureextraktes
        entsprechend Beispiel 1,
 20 g   Paraformaldehyd,
100 g   60-%ige Schwefelsäure  und
  1 g   Zellstoffpulver (Faserlänge 0,5 mm).

Das Zellstoffpulver wird der Schaummasse gleichzeitig mit dem Paraformaldehyd zugefügt.

Der getrocknete Schwamm weist zusammenhängende Poren mit Durchmessern von 0,5 bis 1 mm auf, die in gleichmäßiger Verteilung vorliegen. Der Nucleinsäuregehalt des getrockneten Schwamms beträgt 1,4 %. Der Schwamm ist elastisch und nimmt das 18fache seines Trockengewichts an Wasser auf.

## Vergleichsbeispiele

In einem Becherglas werden 250 g der Polyvinylalkohol-Lösung gemäß Beispiel 1 vorgelegt und unter Rühren mit einem Schnellrührer bei 500 Upm portionsweise mit 30 g der Natrium-ölsäuremethyltaurid-Lösung gemäß Beispiel 1 versetzt. Dieses Gemisch wird analog Beispiel 1 vorgeschäumt.

a) Nach der Überführung in eine 1-l-Form analog Beispiel 1 und Erwärmung auf 75°C bildet sich kein gleichmäßiger Schaum aus, sondern es bildet sich eine gelartige Flüssigkeit, die zur Oberfläche hin in immer größere Schaumblasen übergeht.

b) Läßt man dagegen die vorgeschäumte Masse 24 Stunden lang bei einer Temperatur von 35°C reagieren, so tritt eine starke Schrumpfung ein und der erhaltene Schwamm zeigt von unten nach oben zunehmend größere Poren. Außerdem ist der Schwamm unelastisch. Phosphor kann in diesem Schwamm nicht nachgewiesen werden.

Patentansprüche:

1. Offenporiger Formkörper aus acetalisiertem Polyvinylalkohol, dadurch gekennzeichnet, daß er (a) aus einem
acetalisierten Polyvinylalkohol besteht, der vor der
Acetalisierung eine Esterzahl von 50 bis 270 mg KOH/g
und dessen 4gewichtsprozentige wäßrige Lösung bei einer
Temperatur von 20°C eine Viskosität von 4 bis 50 mPa·s
aufwies, (b) Poren mit Durchmessern im Bereich von 0,5 bis
5 mm in gleichmäßiger Verteilung aufweist und (c) eine
Nucleinsäure entlält.

2. Formkörper nach Anspruch 1, dadurch gekennzeichnet, daß
er aus einem formalisierten Polyvinylalkohol besteht.

3. Formkörper nach Anspruch 1, dadurch gekennzeichnet, daß
er die Nucleinsäure in einer Menge von 0,2 bis 2 Gewichtsprozent enthält.

4. Verfahren zur Herstellung eines offenporigen Formkörpers
aus acetalisiertem Polyvinylalkohol durch Acetalisierung
von Polyvinylalkohol in einem Gasblasen enthaltenden, sauren wäßrigen Medium in Gegenwart eines üblichen Netzmittels,
dadurch gekennzeichnet, daß ein Polyvinylalkohol, der eine
Esterzahl von 50 bis 270 mg KOH/g und dessen 4gewichtsprozentige wäßrige Lösung bei einer Temperatur von 20°C eine
Viskosität von 4 bis 40 mPa·s aufweist, in Gegenwart einer
schaumstabilisierend wirkenden Menge einer Nucleinsäure
acetalisiert wird.

5. Verfahren nach Anspruch 4, dadurch gekennzeichent, daß
die Acetalisierung mit Hilfe eines aliphatischen Aldehys oder Dialdehyds durchgeführt wird.

6. Verfahren nach Anspruch 5, dadurch gekennzeichnet, daß
als aliphatischer Aldehyd Formaldehyd oder Paraformaldehyd verwendet wird.

7. Verfahren nach Anspruch 4, dadurch gekennzeichnet, daß die Nucleinsäure in einer Menge von 0,5 bis 5 Gewichtsprozent (bezogen auf die Gesamtmenge aus Polyvinylalkohol und Nucleinsäure) verwendet wird.

8. Verfahren nach Anspruch 4, dadurch gekennzeichnet, daß die Acetalisierung bei einer Temperatur von 65 bis 100 °C durchgeführt wird.

9. Verfahren nach Anspruch 4, dadurch gekennzeichnet, daß die Acetalisierung unter gleichzeitiger homogener Verteilung eines inerten Gases im Reaktionsgemisch durchgeführt wird.